# EUROPÄISCHE PATENTSCHRIFT

(11) **EP 3 315 813 B1**
(45) Veröffentlichungstag und Bekanntmachung des Hinweises auf die Patenterteilung: **30.10.2019**
(21) Anmeldenummer: 17182943.5
(22) Anmeldetag: 25.07.2017
(51) Int. Cl.: F16F 9/04, F16F 9/05

(54) **LUFTFEDERELEMENT**
AIR SPRING UNIT
ÉLÉMENT FORMANT RESSORT PNEUMATIQUE

(30) Priorität: 27.10.2016 DE 102016221202
(43) Veröffentlichungstag der Anmeldung: 02.05.2018
(73) Patentinhaber: ContiTech Luftfedersysteme GmbH, 30165 Hannover (DE)
(72) Erfinder: Kolle, Christian, 31275 Lehrte (DE); Stöter, Bernd, 30880 Laatzen (DE)
(74) Vertreter: Kilsch, Armin Ralph

(56) Entgegenhaltungen:
- EP-A1- 0 510 417
- EP-A2- 1 031 756
- WO-A1-02/086346
- WO-A1-2004/018895
- WO-A1-2010/019862
- DE-A1- 4 135 731
- DE-A1- 19 534 977
- DE-A1-102005 046 493
- DE-A1-102007 023 995
- DE-A1-102008 045 588
- JP-A- S62 266 240
- US-A- 3 897 941
- US-A1- 2012 015 182
- US-A1- 2012 240 817

## Beschreibung

Die Erfindung betrifft ein Luftfederelement mit einem Arbeits- oder Federraum, welcher durch mindestens einen Luftfederdeckel, einen in aller Regel zylindrischen oder konischen Luftfederkolben und einem zwischen Deckel und Kolben angeordneten Rollbalg aus elastomerem Material gebildet ist, wobei der Rollbalg auf der Außenseite des Kolbens abrollt.

Luftfederelemente, z. B. Luftfedern für Industrie- oder Fahrzeuganwendungen, enthalten in der Regel einen Deckel als oberes Anschlussteil, einen Elastomerbalg mit eingebetteten Festigkeitsträgern, die aus Einzellagen parallel angeordneter Fäden bestehen, wobei in der Regel zwei Lagen in gekreuzter Anordnung im Elastomerbalg eingebettet sind, und ein unteres Anschlussteil, das je nach Balgtype als Kolben oder Deckel ausgeführt ist. In Fahrzeuganwendungen sind Luftfederelemente in der Regel zwischen einer gefederten und einer ungefederten Masse angeordnet, das heißt also beispielsweise zwischen einer Karosserie und einem Fahrwerk eines Fahrzeugs.

Das Innengummi des Elastomerbalgs/Rollbalgs, d.h. die innere Lage des Balges besteht üblicherweise aus einem Elastomer-Werkstoff mit größerer Luftundurchlässigkeit und soll die Balgwand gegen die eingeschlossene, normalerweise unter Druck stehende Luft abdichten.

Rollbälge sind üblicherweise so ausgebildet, dass sie unter Innendruck eine zylindrische Außenmantelfläche bilden. Beim bestimmungsgemäßen Federvorgang in Axialrichtung des Luftfederelements rollt ein Teil des Balges zwischen dem kleinen Durchmesser am Kolben und dem großen Durchmesser am Außenumfang ab. Dabei sind die Bälge in der Regel jeweils mit Klemm- oder Spannringen an Deckel und Kolben befestigt.

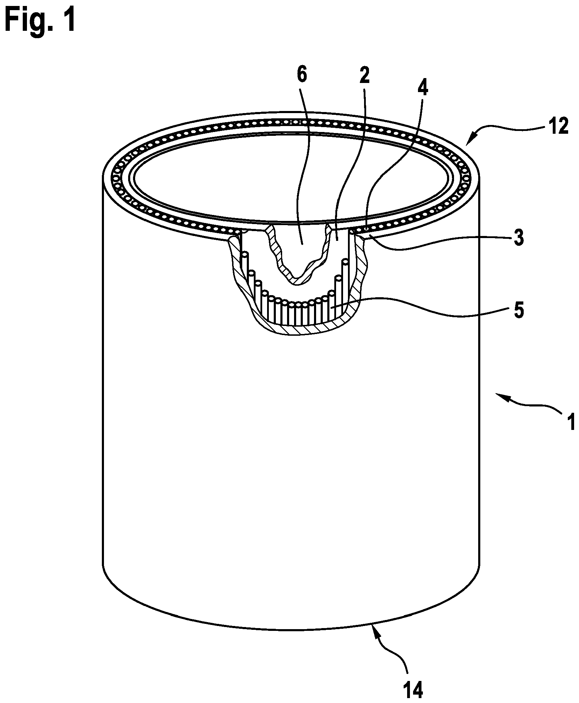

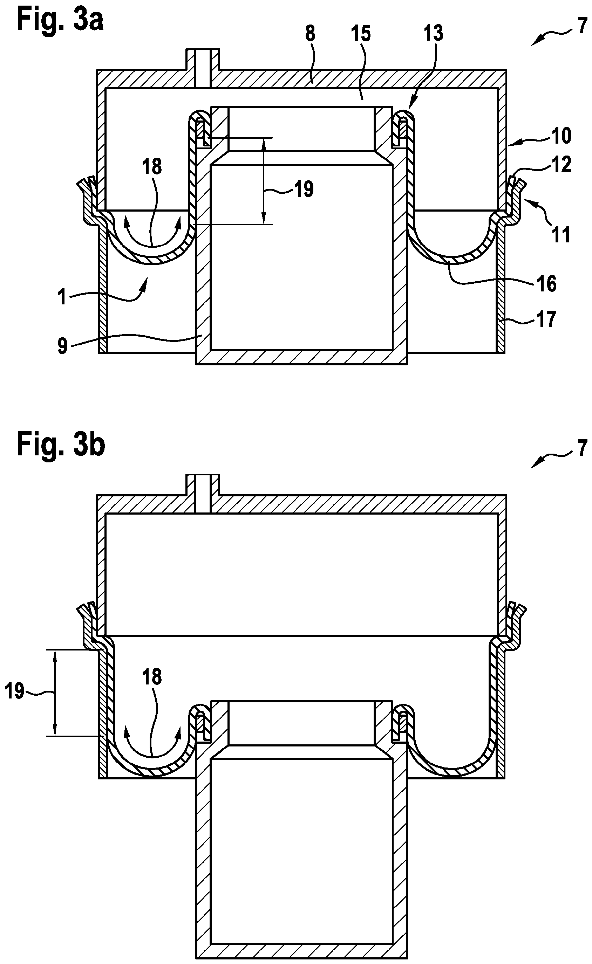

Einen solchen Rollbalg offenbart die DE 102010000167 A1. Die dortigen Fig.1 und 3 zeigen einen entsprechenden Schlauchrollbalg in den beiden Endstellungen des axialen Federvorgangs, Fig.1 zeigt die minimale Höhe bei voller Einfederung und Fig.3 die maximale Höhe bei maximaler Ausfederung. Es ist in der Zusammenschau erkennbar, dass die Länge des Balges viel größer ist als es für die ausschließliche Realisierung des Abrollvorganges beim normalen Betrieb erforderlich wäre. So besitzt die äußere Mantelfläche des Balgs im druckbelasteten Zustand bei minimaler Höhe des Luftfederelements in der Regel in etwa die Länge des Kolbens. Diese Mantelfläche ist in Bezug auf den normalen Federvorgang statisch und nimmt nicht an Abrollbewegungen teil.

Weiterhin sind Ausführungen von Luftfedern bekannt, bei denen sich die äußere Schlauchrollbalg-Mantelfläche in einem zylindrischen Bauteil innen abstützt. Die DE 10163818 A1 und die DE 10038197 C2 offenbaren eine derartige Konstruktion.

Die bei Luftfedern verwendeten Elastomere sind nicht absolut gasdicht. Abhängig vom Permeationskoeffizienten des jeweiligen Elastomerwerkstoffs entweicht bzw. diffundiert unter Innendruck permanent ein Teil des Gasvolumens. In der Regel stehen Luftfedern im Betrieb mit einer Druckluftquelle in Verbindung, so dass dieser Verlust stets ausgeglichen werden kann. Es sind auch Anwendungen bekannt, in denen die Luftfedern mit einem sogenannten Tankventil versehen sind. Hier erfolgt keine permanente Druckversorgung, sondern nur periodisch ein Wiederauffüllen je nach Gasverlust.

Bei Luftfedern der oben genannten Art ist aufgrund der großen Balgoberfläche die Permeation konstruktionsbedingt relativ hoch. Insbesondere dann, wenn ein Teil der Mantelfläche, wie oben dargelegt, beim normalen Federvorgang für Rollbewegungen gar nicht erforderlich ist und nur bei wenigen extremen Ausfederungen gebraucht wird, ist die Balgoberfläche groß und erhöht die Permeation. Eine Möglichkeit, hier entgegenzuwirken, bestünde in einer Erhöhung der Balgwanddicke. Dies würde zwar die Permeation verringern, sich aber nachteiligerweise negativ auf die dynamischen Eigenschaften des Luftfederelements auswirken.

Ein flächiger Kontakt der Balgaußenfläche am Innenumfang einer zylindrischen Abstützung, wie in der DE 10163818 A1 offenbart, kann auch die Permeation in diesem Bereich nicht verhindern, auch wenn die Abstützung aus gasdichtem Werkstoff besteht.

Aufgrund der hohen dynamischen Anforderungen an Luftfedern kommen zudem als übliche Elastomere Werkstoffe zum Einsatz, die auf Naturkautschuk (NR), Butadien-Kautschuk (BR), Styrol-Butadien-Kautschuk (SBR) und Chloropren-Kautschuk (CR) aufgebaut sind. Diese Werkstoffe besitzen aber per se bereits eine höhere und damit für die Luftfeder-Anwendung ungünstigere Permeabilität.

Es wurde bereits überlegt, auf der Innenseite von elastomeren Körpern besondere Beschichtungen oder Folien anzuordnen, um die teilweise hohen Permeationsraten zu verringern. So ist bei Reifen die Verwendung einer Folie aus Elastomer-Thermoplast-Legierungen (TPE-V, Dynamically Vulcanized Alloys - DVA) als innen angeordnete Permeationssperre bekannt, wie dies in der EP 2824132A1 und WO 2012/125195A1 offenbart ist. Elastomer-Thermoplast-Legierungen erhält man durch Verblenden von Thermoplasten mit feindispersen vernetzten Kautschuken. Eine solche DVA Folie lässt sich zwar dehnen, jedoch nur schlecht stauchen. Sie ist daher a priori wenig für die Verwendung bei einem Schlauchrollbalg geeignet, bei dem durch die üblichen Verstärkungseinlagen im Kreuzverbund beim Abrollen der Balgwand in der Rollfalte im Elastomer ein mehrachsiger Spannungszustand und somit eine mehrachsige Verformung mit Stauchung und Dehnung auftritt.

Die JP S 599 35 36 A (Abstract) lehrt dagegen eine auf der dem Druckraum abgewandten Seite angeordnete Fluorschicht, die die Gasdichtigkeit steigern soll. Bei der Anordnung der Fluorschicht auf der Außenseite besteht die Gefahr der Ablösung durch Blasenbildung zwischen der Balgwand und der Fluorschicht, weil das permeations-dichteste Material außen angeordnet ist.

Ein Ersatz von Luftfederelementen mit Bälgen/Rollbälgen durch Zylinder mit Kolben anderer Materialien stellt auch keine akzeptable Lösung dar, da allein in Bezug auf Stick-Slip-Verhalten, Haft- und Gleitreibung, Lebensdauer und Dämpfung die Rollbalglösungen erheblich Vorteile besitzen, von Gewichts und Bauraumproblemen einmal abgesehen.

Die EP 1 031 756 A2 offenbart eine Befestigung für einen Luftfederrollbalg, bei dem ein zusätzlicher Klemmring oder eine Verklebung mit dem Kolben die Bildung von unerwünschten Falten im Rollbalg verhindern soll, wenn der Innendruck auf einen Mindestwert fällt oder gar nicht mehr vorhanden ist. Besondere Ausführungen im Hinblick auf die Dichtigkeit sind nicht offenbart.

Die JP S 62 266240 A offenbart eine Luftfeder mit zusätzlichen Beschichtungen aus einer Mischung mit Epichlorhydrine-Propylen-Oxid zur Erreichung eines besonderen Wärmewiderstands und einer besonders widerstandsfähigen Rollfalte.

Die US 2012/0015182 A2 offenbart Gummilagen allgemeiner Art, die in einem Co-Extrusionsprozeß mit einer aus einer mittels dynamischer Vulkanisationen erhaltenen Elastomer-Thermoplast-Legierung erzeugt werden.

Für die Erfindung bestand die Aufgabe, die im Stand der Technik vorhandenen Nachteile zu beseitigen und ein Luftfederelement für hohe Betriebsdrücke bereitzustellen, welches Gas als Arbeitsmedium verwendet und auch ohne permanente externe Druckversorgung eine deutlich verringerte Leckagerate besitzt. Gelöst wird diese Aufgabe durch die Merkmale des Hauptanspruchs. Weitere vorteilhafte Ausbildungen sind in den Unteransprüchen offenbart.

Dabei weist der Luftfederdeckel eine in Richtung des Kolbens sich erstreckende, parallel zur Kolbenwand ausgebildete und letztere ringförmig mit Abstand umgebende Wandung auf, die vorzugsweise über einen Teilbereich der Kolbenwand letztere ringförmig umschließt. Der Rollbalg ist einerseits am Kolbenende und andererseits an dem zum Kolben gerichteten Wandungsende des Deckels befestigt. Die Rollbalglänge entspricht abzüglich der erforderlichen Einspannlängen im Wesentlichen dem um die Rollfaltenlänge bzw. um den Rollfaltenbogen vergrößerten Rollweg entspricht. Damit wird der eigentliche Innenraum / das Innenvolumen des Arbeitsraums im Wesentlichen also durch die Länge der rückspringenden Wandung des Deckels bestimmt und nicht durch eine lange zylindrische Ausdehnung der Balgwandung, die, wenn überhaupt, nur bei extremen Federungswegen gebraucht würde. Da sowohl Deckel als auch Kolben aus Metall oder Kunststoff bestehen, jedenfalls aus starren Materialien mit vernachlässigbarer Permeationsrate, wird die Leckagerate des Luftfederelementes insgesamt stark reduziert. Eine vorteilhafte Weiterbildung besteht darin, dass die Befestigung des Rollbalgs am Wandungsende und am Kolbenende jeweils so ausgebildet ist, dass die Schnittflächen der Rollbalgenden außerhalb des Arbeitsraums liegen. Auf diese Weise wird verhindert, dass das im Druckraum befindliche Fluid in die Fäden der Festigkeitsträgerlage eindringen und auf diesem Wege dann auch in das Balgmaterial der Balgwand / in die Balgmatrix eindringen kann.

Erfindungsgemäß weist der Rollbalg auf seiner dem Arbeitsraum zugewandten Innenseite eine Folie oder Schicht aus einer mittels dynamischer Vulkanisationen erhaltenen Elastomer-Thermoplast-Legierung auf (DVA Folie). Eine solche DVA-Folie besitzt eine sehr niedrige Permeationsrate und verhindert dadurch, dass sie an der inneren Elastomerschicht anhaftet, dass sie direkt mit dem Fluid im Federelement in Kontakt ist und dass sie die Balgwand vom Druckfluid abschirmt, fast vollständig jegliche Leckage durch die Balgwand.

Zusätzlich weist der Rollbalg erfindungsgemäß auf der dem Druckraum abgewandten Seite der DVA-Folie eine Schicht aus Butylgummi auf. Dadurch lässt sich die Leckagerate weiter reduzieren. Darüberhinaus weist der Rollbalg erfindungsgemäß auf der dem Druckraum abgewandten Seite der DVA-Folie eine Schicht aus Nitril-Butadien-Kautschuk, d.h. NBR-Gummi aufweist.

Dies gilt ebenso für eine weitere, nicht erfindungsgemäße Ausbildung, die darin besteht, dass der Rollbalg zusätzlich auf seiner dem Arbeitsraum zugewandten Innenseite eine Schicht aus Epichlorhydrinelastomer (ECO) aufweist.

Erfindungsgemäß ist der Rollbalg mit im Wesentlichen längs in Abrollrichtung und im Wesentlichen parallel zur Achse des Luftfederelementes eingebetteten Festigkeitsträgern versehen. Grundsätzlich ist eine solche Ausbildung bekannt, zum Beispiel durch die DE 3643073 A1. Dort ist eine solche Anordnung von Festigkeitsträgern vorgesehen, um mehrachsige Spannungszustände innerhalb der Wand der Luftfeder zu vermeiden. Im Zusammenspiel mit der hier vorgesehenen DVA-Folie weist diese Ausführung jedoch besondere Vorteile auf. Eine DVA Folie lässt sich zwar dehnen, jedoch nur sehr schlecht stauchen. Bei der Verwendung der parallelen Festigkeitsträger lassen sich Letztere dann so im Matrixverbund anordnen, dass beim Abrollen des Rollbalges an der innenliegenden DVA-Folie lediglich Zugspannungen/Dehnungen entstehen und keine Druckspannungen.

Insgesamt wirken also die Maßnahmen der Verringerung der Länge des elastomeren Rollbalgs, der Ersatz der fehlenden Länge durch ein rohrförmiges Deckelteile bzw. Wandung, die Innenbeschichtung und die dafür förderlich angepasste Ausbildung der Festigkeitsträger auf eine überraschende Weise synergistisch in der Weise, dass eine besonders ausgeprägte Dichtigkeit und äußerst geringe Permeationsrate erreicht wird.

Eine weitere vorteilhafte Ausbildung besteht darin, dass der Rollbalg mit mehreren Lagen von eingebetteten Festigkeitsträgern versehen ist. Mit einer solchen Anordnung lässt sich die Festigkeit der durch die Rollfalte beanspruchten Balgwand erhöhen.

Eine weitere vorteilhafte Ausbildung besteht darin, dass die mehreren Lagen von eingebetteten Festigkeitsträgern sich spitzwinklig kreuzen. Der Winkel, unter dem sich die Lagen dann kreuzen, sowie die Dehnung des Festigkeitsträgers und die Anordnung der Lagen innerhalb der Wanddicke der Balgwand ist gemäß den obigen Ausführungen so auszuwählen, dass die auf der inneren Balgwand angeordneten DVA Folie auch durch den dann entstehenden mehrachsigen Spannungszustand nicht gestaucht wird.

Eine weitere vorteilhafte Ausbildung besteht darin, dass sich an die in Richtung des Kolbens sich erstreckende Wandung des Luftfederdeckels eine zylindrische Stützmanschette anschließt, auf deren Innenseite der Rollbalg abrollt und sich beim Ausfedern des Luftfederelements abstützt. Eine solche Ausführung erweitert die Freiheitsgrade bei der Auslegung bzw. Konstruktion des Rollbalges erheblich, da bei vorhandener Außenabstützung die Steifigkeit/Elastizität und die Spannungsverteilung als wesentliche Einflussgrößen bei der Auslegung zu berücksichtigen sind, während die Formfestigkeit des Balges nicht mehr als bestimmende Größe die anderen Parameter überdeckt.

Eine weitere vorteilhafte Ausbildung besteht darin, dass der Rollbalg deckelseitig zwischen Stützmanschette und Wandungsende klemmend fixiert ist. Dies vereinfacht insbesondere die Montage und die Wartung bzw. den Austausch.

Unter Beachtung der erfindungsgemäßen Lehre kann ein Luftfederelement auch mit beidseitigen Kolben und zwei Bälgen ausgeführt sein, wobei die Bälge mittels eines zylindrischen Rohres miteinander verbunden sind, innerhalb dessen der wesentliche Arbeits- und Federraum ausgebildet ist.

Anhand eines Ausführungsbeispiels soll die Erfindung näher erläutert werden. Es zeigen
- Fig. 1: den Aufbau der Balgwand des Luftfederrollbalgs eines Luftfederelementes,
- Fig. 2: ein Luftfederelement
- Fig. 3a und b: ein Luftfederelement in eingefedertem und ausgefedertem Zustand

Fig. 1 zeigt im Detail zunächst den Aufbau der Balgwand des Luftfederrollbalgs/Rollbalgs 1 eines Luftfederelementes für eine Kraftfahrzeugfederung. Der Rollbalg 1 ist hier noch nicht zwischen Deckel und Kolben befestigt und in seiner ursprünglichen Herstellungsform dargestellt, nämlich als torusförmiger Körper bzw. Zylinder.

Zwischen einer inneren Elastomerschicht 2 des Rollbalgs 1 und seiner äußeren Elastomerschicht 3 ist eine Lage Festigkeitsträger 4 eingebettet. Der Festigkeitsträgerlage besteht aus Fäden bzw. Corden 5, welche parallel zueinander in Axialrichtung des Balges angeordnet sind. Auf der Innenseite der inneren Elastomerschicht 2 ist eine DVA-Folie 6 vorgesehen, die eine sehr geringe Permeationsrate der Balgwand 1 bewirkt. An der Stirnfläche 12 des Balges 1 liegt die Festigkeitsträgerlage 4 frei. Zur Montage des Rollbalgs für die Herstellung eines erfindungsgemäßen Luftfederelements wird das obere Ende des in Figur 1 gezeigten Rollbalgs am Luftfederdeckel befestigt und das untere Ende am Luftfederkolben, wie dies am besten in der Zusammenschau mit der Figur 3b deutlich wird.

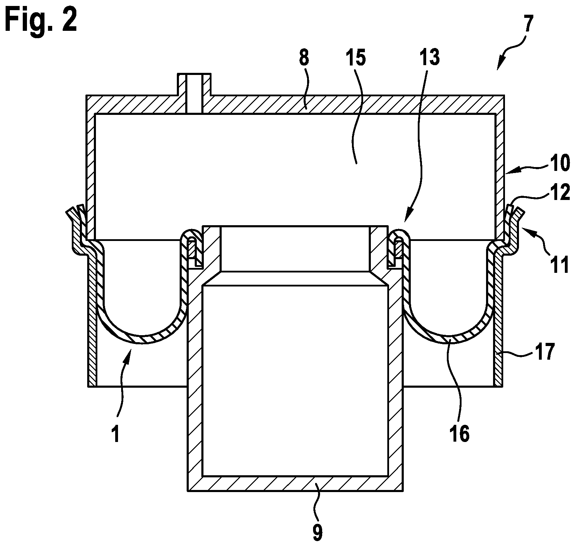

In Fig. 2 ist solch ein Luftfederelement 7 mit einem Luftfederdeckel 8 und einem Luftfederkolben 9 dargestellt. Das Luftfederelement ist zwischen einer hier nicht näher dargestellten Karosserie eines PKW als gefederter Masse und einem Fahrwerk als ungefederter Masse eingespannt. Der Deckel/Luftfederdeckel 8 ist ebenso wie der Kolben 9 in Metall ausgeführt. Der Luftfederdeckel 8 weist eine in Richtung des Kolbens 9 sich erstreckende, parallel zur Kolbenwand ausgebildete und letztere ringförmig mit Abstand umgebende Wandung 10 auf, die somit als zylindrischer rohrförmiger Abschnitt des Deckels ausgebildet ist und gegen den Kolben zurückspringt.

Der Rollbalg 1 ist, wie oben gesagt und in Verbindung mit Fig. 3b ersichtlich, einerseits am Kolbenende und andererseits an dem zum Luftfederkolben 9 gerichteten Wandungsende des Luftfederdeckels 8 befestigt. Die Rollbalglänge entspricht - natürlich abzüglich der erforderlichen Einspannlängen - im Wesentlichen dem um die Rollfaltenlänge bzw. um den Rollfaltenbogen 18 vergrößerten Rollweg 19, wie in Fig. 3b ersichtlich. Der eigentliche Raum / das Volumen des Arbeits- und Federraums 15 wird also im Wesentlichen durch die Wandung des Deckels und den Kolben gebildet, hier einschließlich des Kolbeninnenraums.

Ein Ende des Rollbalgs 1 ist also am unteren Ende 11 der Wandung 10, d.h. am unteren Ende des zylindrisch-rohrförmigen Abschnitts ist befestigt. Insofern ersetzt dieser rohrförmige Abschnitt einen üblicherweise bei Luftfedern vorhandenen längeren zylindrischen Teil der Balgwand. Das andere Ende des Rollbalgs 1 ist am Luftfederkolben 9 befestigt, hier mit der Klemmbefestigung 13. Beide Befestigungen sind derart ausgeführt, dass die Stirnseiten der Rollbalgenden 12, 14 nicht mit dem Arbeits- und Federraum 15 bzw. Druckraum der Luftfeder in Kontakt stehen. Auf diese Weise wird verhindert, dass das im Arbeits- und Federraums 15 befindliche Fluid, hier die Druckluft, in die Fäden 5 der Festigkeitsträgerlage 4 eindringen und auf diesem Wege die DVA-Folie unterwandern kann. Der Rollbalg 1 bildet zwischen den Befestigungen 11 und 13 eine Rollfalte 16 mit der Bogenlänge 18 aus. Unterhalb der Befestigungszone 11 erstreckt quasi sich in Verlängerung der Wandung ein zylindrisches Bauteil 17, welches die Balgwand am Außenumfang abstützt. Diese Bauteile sind auch unter dem Begriff "Stützglocke" bekannt.

Fig.3a bildet hier die Luftfeder im nahezu vollständig eingefederten Zustand ab. Der Balg 1 hat sich zwischen den Befestigungen 11 und 13 dergestalt verformt, dass die Rollfalte 16 unmittelbar an der deckelseitigen Befestigung beginnt und sich der Rollbalg 1 an der Mantelfläche des Luftfederkolbens 9 abstützt. Im Vergleich zu üblichen Schlauchrollbälgen besitzt die Konstruktion eine kleinere Balgoberfläche und verringert hiermit konstruktiv die Permeation am Außenumfang. Die kleinere Balgoberfläche wird dadurch erreicht, dass der zylindrische rohrförmige Abschnitt bzw. die Wandung 10 einen Teil der üblichen zylindrischen Balglänge ersetzt.

In Fig.3b ist die Luftfeder bei fast vollständiger Ausfederung dargestellt. Der Balg 1 hat sich zwischen den Befestigungen 11 und 13 dergestalt verformt, dass die Rollfalte 16 unmittelbar an der kolbenseitigen Befestigung beginnt und der Balg innen an der zylindrischen Abstützung anliegt.

Anhand des durch Fig. 3a und 3b beschriebenen Abrollvorgangs wird die Verformung der Balgwand und damit die Beanspruchung der DVA-Folie ersichtlich. Betrachtet man den am Kolben abgestützten Balg als Ausgangszustand (vollständig eingefedert) für den Verbund aus DVA-Folie, Elastomer und achsparallelen Fäden, dann bewirkt das Abrollen beim Ausfedern eine Vergrößerung der Umfangslänge und damit eine Dehnung der DVA-Folie in Umfangsrichtung. In Axialrichtung ändert sich die Länge der Balgwand nicht. Die Fäden erfahren durch den Innendruck eine Zugbelastung, die je nach Fadenkonstruktion zu einer gewissen Dehnung führt, keinesfalls zu einer Stauchung. Diese Fadendehnung kompensiert die sonst auftretende Stauchung auf der Innenfläche der Rollfalte (Erläuterung: kleinerer Krümmungsradius auf der Innenseite der Rollfalte). Wären die Fäden als Kreuzverbund aus zwei Lagen in einem Winkel deutlich abweichend von der Achsrichtung ausgeführt, würde der Abrollvorgang zwangsläufig zu einer mehrachsigen Belastung der Folie als Kombination aus erheblicher Stauchung und Dehnung führen.

Durch die erfindungsgemäße Konstruktion erhält man ein gasgefülltes Federelement, das ohne externe Druckversorgung möglichst lange bis zu einem vorgegebenen Grenzwert betrieben werden kann, ohne dass Gas nachgefüllt werden muss. Gegenüber einem Federelement in Kolben-Zylinder Konstruktion weist das erfindungsgemäße Gasfederelement den so genannten Stick-Slip-Effekt nicht auf, das heißt es gibt kein so genanntes "Losbrechen" oder ruckelndes Anlaufen bei einer Gasfeder. Weitere Vorteile sind geringe Dämpfung des Federelementes, kein Abrieb an gleitenden Dichtungen und höherer Betriebsdruck durch Abstützung in einem zylindrischem Bauteil/Stützglocke. Das erfindungsgemäße Luftfederelement besitzt auch bei hohen Lastwechselzahlen zwischen min. und max. Position eine überaus geringe Leckage.

Natürlich können die erfindungsgemäßen Luftfederelemente nicht nur als Luftfederungen im Kraftfahrzeugbereich eingesetzt werden, sondern - evtl. mit fachmännischen Anpassungen - auch im Industriebereich sowie in Anwendungen als Kompensatoren oder als Luftspannelemente.

### Bezugszeichenliste

### (Teil der Beschreibung)

- 1: Rollbalg
- 2: Innere Elastomerschicht
- 3: Äußere Elastomerschicht
- 4: Festigkeitsträgerlage
- 5: Fäden, Corde
- 6: DVA- Folie
- 7: Luftfederelement
- 8: Luftfederdeckel
- 9: Luftfederkolben
- 10: Rückspringende Wandung des Deckels/zylindrischer rohrförmiger Abschnitt
- 11: Befestigung deckelseitig
- 12: Stirnseite Balg deckelseitig
- 13: Befestigung kolbenseitig
- 14: Stirnseite Balg kolbenseitig
- 15: Arbeits- und Federraum/Druckraum
- 16: Rollfalte
- 17: Zylindrische Abstützung
- 18: Rollfaltenbogen
- 19: Rollweg

## Patentansprüche

1. Luftfederelement (7) mit einem Arbeits- oder Federraum (15), welcher durch mindestens einen Luftfederdeckel (8), einen Luftfederkolben (9) und einem zwischen Deckel und Kolben angeordneten Rollbalg (1) aus elastomerem Material gebildet ist, wobei der Rollbalg (1) auf der Außenseite des Luftfederkolbens (9) abrollt, wobei der Luftfederdeckel (8) eine in Richtung des Kolbens (9) sich erstreckende, parallel zur Kolbenwand ausgebildete und letztere ringförmig mit Abstand umgebende Wandung (10) aufweist, vorzugsweise über einen Teilbereich der Kolbenwand letztere ringförmig umschließt, wobei der Rollbalg (1) einerseits am Kolbenende und andererseits an dem zum Kolben gerichteten Wandungsende des Deckels befestigt ist und die Rollbalglänge abzüglich der erforderlichen Einspannlängen im Wesentlichen dem um die Rollfaltenlänge bzw. um den Rollfaltenbogen (18) vergrößerten Rollweg (19) entspricht, wobei der Rollbalg (1) mit im Wesentlichen längs in Abrollrichtung und im Wesentlichen parallel zur Längsachse des Luftfederelementes (7) eingebetteten Festigkeitsträgern (5) versehen ist, **dadurch gekennzeichnet, dass** der Rollbalg (1) auf seiner dem Arbeits- oder Federraum (15) zugewandten Innenseite eine Folie oder Schicht (6) aus einer mittels dynamischer Vulkanisationen erhaltenen Elastomer-Thermoplast-Legierung aufweist (DVA Folie) sowie zusätzlich auf der dem Druckraum abgewandten Seite der DVA-Folie eine Schicht aus Nitril-Butadien-Kautschuk oder eine Schicht aus Butylgummi aufweist.

2. Luftfederelement nach Anspruch 1 bei dem die Befestigung (11, 13) des Rollbalgs am Wandungsende und am Kolbenende jeweils so ausgebildet ist, dass die Schnittflächen (12, 14) der Rollbalgenden außerhalb des Arbeits- oder Federraum (15) liegen.

3. Luftfederelement nach einem der Ansprüche 1 bis 2, bei dem der Rollbalg (1) mit mehreren Lagen von eingebetteten Festigkeitsträgern versehen ist, insbesondere mit mehreren Lagen von sich spitzwinklig kreuzenden eingebetteten Festigkeitsträgern.

4. Luftfederelement nach einem der Ansprüche 1 bis 3, bei dem sich an die in Richtung des Kolbens sich erstreckende Wandung des Luftfederdeckels eine zylindrische Stützmanschette (17) anschließt, auf deren Innenseite der Rollbalg (1) abrollt und sich beim Ausfedern des Luftfederelements (7) abstützt.

5. Luftfederelement nach Anspruch 4, bei dem der Rollbalg (1) deckelseitig zwischen Stützmanschette und Wandungsende klemmend fixiert ist.

6. Fahrzeugfederung mit einem Luftfederelement nach einem der Ansprüche 1 bis 5.

## Claims

1. Air spring element (7) having a working or spring space (15) which is formed by way of at least one air spring cover (8), an air spring piston (9) and a rolling lobe (1) which is made from elastomeric material and is arranged between the cover and the piston, the rolling lobe (1) rolling on the outer side of the air spring piston (9), the air spring cover (8) having a wall (10) which extends in the direction of the piston (9), is configured parallel to the piston wall and surrounds the latter at a spacing in an annular manner, the said air spring cover (8) preferably enclosing the piston wall in an annular manner over a part region of the said piston wall, the rolling lobe (1) being fastened on one side to the piston end and on the other side to that wall end of the cover which is directed toward the piston, and the rolling lobe length minus the required clamping lengths corresponding substantially to the rolling path (19) which is increased by the rolling lobe length or by the rolling lobe curve (18), the rolling lobe (1) being provided with reinforcement materials (5) which are embedded substantially longitudinally in the rolling direction and substantially parallel to the longitudinal axis of the air spring element (7), **characterized in that**, on its inner side which faces the working or spring space (15), the rolling lobe (1) has a film or layer (6) made from a thermoplastic elastomer alloy which is obtained by means of dynamic vulcanization (DVA film) and, on that side of the DVA film which faces away from the pressure space, additionally has a layer consisting of nitrile butadiene rubber or a layer consisting of butyl rubber.

2. Air spring element according to Claim 1, in the case of which the fastening (11, 13) of the rolling lobe to the wall end and to the piston end is configured in each case in such a way that the interfaces (12, 14) of the rolling lobe ends lie outside the working or spring space (15).

3. Air spring element according to either of Claims 1 and 2, in the case of which the rolling lobe (1) is provided with a plurality of layers of embedded reinforcement materials, in particular with a plurality of layers of embedded reinforcement materials which cross at an acute angle.

4. Air spring element according to one of Claims 1 to 3, in the case of which that wall of the air spring cover which extends in the direction of the piston is adjoined by a cylindrical supporting collar (17), on the inner side of which the rolling lobe (1) rolls and is supported during the rebound of the air spring element (7).

5. Air spring element according to Claim 4, in the case of which the rolling lobe (1) is fixed in a clamping manner on the cover side between the supporting collar and the wall end.

6. Vehicle suspension system having an air spring element according to one of Claims 1 to 5.

## Revendications

1. Élément amortisseur pneumatique (7) comprenant une chambre de travail ou d'amortissement (15) qui est formée par au moins un couvercle d'amortisseur pneumatique (8), un piston d'amortisseur pneumatique (9) et un soufflet roulant (1) en matériau élastomère disposé entre le couvercle et le piston, le soufflet roulant (1) roulant sur le côté extérieur du piston d'amortisseur pneumatique (9), le couvercle d'amortisseur pneumatique (8) comportant une paroi (10) qui s'étend dans la direction du piston (9), qui est conçue pour être parallèle à la paroi du piston et qui entoure annulairement cette dernière à une certaine distance, de préférence qui enferme annulairement la paroi de piston sur une partie de cette dernière, le soufflet roulant (1) étant fixé d'une part à l'extrémité du piston et d'autre part à l'extrémité de paroi du couvercle qui est dirigée vers le piston et la longueur du soufflet roulant, déduction faite des longueurs de serrage requises, correspondant sensiblement au chemin de roulement (19) augmenté de la longueur du soufflet roulant ou de l'incurvation (18) du soufflet roulant, le soufflet roulant (1) étant pourvu d'éléments de renforcement (5) incorporés sensiblement dans la direction de roulement et sensiblement parallèlement à l'axe longitudinal de l'élément amortisseur pneumatique (7), **caractérisé en ce que** le soufflet roulant (1) comporte, sur son côté intérieur dirigé vers la chambre de travail ou d'amortissement (15), un film ou une couche (6) d'alliage élastomère-matière thermoplastique obtenu par vulcanisation dynamique (film DVA) et en plus, du côté du film DVA qui est opposé à la chambre de pression, une couche de caoutchouc nitrile-butadiène ou une couche de caoutchouc butyle.

2. Élément amortisseur pneumatique selon la revendication 1, la fixation (11, 13) du soufflet roulant à l'extrémité de la paroi et à l'extrémité du piston étant formée à chaque fois de manière à ce que les plans de section (12, 14) des extrémités du soufflet roulant se trouvent à l'extérieur de la chambre de travail ou d'amortissement (15).

3. Élément amortisseur pneumatique selon l'une des revendications 1 et 2, le soufflet roulant (1) est pourvu d'une pluralité de couches d'éléments de renforcement incorporés, en particulier d'une pluralité de couches d'éléments de renforcement incorporés se croisant suivant un angle aigu.

4. Élément amortisseur pneumatique selon l'une des revendications 1 à 3, un manchon de support cylindrique (17), sur le côté intérieur duquel le soufflet roulant (1) roule et vient en appui lors du débattement de l'élément amortisseur pneumatique (7), se raccordant à la paroi du couvercle d'amortisseur pneumatique, laquelle s'étend en direction du piston.

5. Élément amortisseur pneumatique selon la revendication 4, le soufflet roulant (1) étant fixé de manière serrée du côté couvercle entre le manchon de support et l'extrémité de la paroi.

6. Suspension de véhicule comprenant un élément amortisseur pneumatique selon l'une des revendications 1 à 5.
